# EUROPEAN PATENT SPECIFICATION

(11) **EP 3 663 102 B1**
(45) Date of publication and mention of the grant of the patent: **19.06.2024**
(21) Application number: 18848889.4
(22) Date of filing: 25.07.2018
(51) Int. Cl.: B60C 5/00, C08L 75/08

(54) **PNEUMATIC TIRE**
LUFTREIFEN
PNEUMATIQUE

(30) Priority: 22.08.2017 JP 2017159679
(43) Date of publication of application: 10.06.2020
(73) Proprietor: Sumitomo Rubber Industries, Ltd., Kobe-shi, Hyogo 651-0072 (JP)
(72) Inventor: KAWACHI, Takahiro, Kobe-shi Hyogo 651-0072 (JP)
(74) Representative: Manitz Finsterwald Patent- und Rechtsanwaltspartnerschaft mbB
(86) International application number: PCT/JP2018/027957
(87) International publication number: WO 2019/039180

(56) References cited:
- EP-A1- 1 676 722
- EP-A1- 1 950 057
- WO-A1-2016/051371
- WO-A1-2017/012720
- DE-A1-102015 213 496
- JP-A- H02 127 101
- JP-A- 2006 103 606
- JP-A- 2011 148 437
- JP-A- 2015 136 863
- JP-A- 2017 109 701

## Description

### Technical Field

The present invention relates to a pneumatic tyre provided with a noise damper on an inner surface of a tread portion.

### Background Art

Conventionally, in order to suppress road noise of a pneumatic tyre, a pneumatic tyre has been proposed in which a noise damper made of a porous material is arranged on the inner surface of the tread portion.

On the other hand, as a repair method when a pneumatic tyre is punctured, it is known that puncture repair liquid and compressed air are sequentially injected into the tyre. In this repair method, when the tyre is rotated after the injection, the puncture repair liquid flows into the puncture hole due to air pressure, thereby it is possible that the puncture hole is sealed.

However, as described above, in a tyre in which the noise damper is arranged on the inner surface of the tread portion, when the puncture repair liquid is injected into the tyre, the noise damper gets in the way and makes it difficult for the puncture repair liquid to flow into the puncture hole. Therefore, there is a problem that it takes time until the puncture hole is sealed.

In Patent document 1 shown below, it has been proposed that the noise damper is configured to have a multi-layer structure of a sound absorbing material and a repair liquid permeable layer, and that the repair liquid permeable layer is made of a porous material having interconnected bubbles (interconnected cells) and a lower flow resistance than that of the sound absorbing material. Patent Document 2 discloses a tire wherein a noise reducing device comprising a flexible polyurethane foam is fixed to a ring-shaped band member, the number of cells in the foam being 25 cells / 25 mm or more. Patent Document 3 discloses a pneumatic tire wherein a sound-absorbing foam layer is disposed at an inner surface opposite to the tread surface, the volume ratio of pores in said foam layer being between 70 and 90% of the total volume of the foam layer.

However, since the proposed noise damper described above has a multi-layer structure, the productivity is impaired and the manufacturing cost is disadvantageous.

### Prior Art Documents

### Patent Documents

Patent document 1: Japanese Patent Application Publication No. 2009-292461
Patent Document 2: EP 1 950 057 A1
Patent Document 3: DE 10 2015 213 496 A1

### Summary of the Invention

### Problems to be Solved by the Invention

An object of the present invention is to provide a pneumatic tyre capable of performing puncture repair by using a puncture repair liquid quickly and reliably while the noise damper has a single-layer structure.

### Means for Solving the Problem

The present invention is a pneumatic tyre provided with a noise damper made of a porous material having interconnected cells on an inner surface of a tread portion, wherein in the noise damper, the number of cells, measured in accordance with JIS K 6400-1, is 30 or more and 60 or less / 25 mm length on a straight line, wherein the number of cells means the number of the cells at least a part of which is located on the 25 mm long straight line, and in an arbitrary cross section of the noise damper, a ratio of a total sum ΣSa of cross-sectional areas of the cells to an area (S) of the cross section is 10% or more and 30% or less.

In the pneumatic tyre according to the present invention, it is preferred that the noise damper has a water absorption rate of 8% or more and 15% or less.

In the pneumatic tyre according to the present invention, it is preferred that the porous material is ether-based polyurethane.

### Advantageous Effects of the Invention

In the present invention, as described above, in the noise damper made of the porous material having interconnected bubbles, the number of the bubbles (cells) is set to be 30 or more / 25 mm, and thus the bubbles (cells) are miniaturized. Therefore, the puncture repair liquid is likely to penetrate into the inside of the noise damper due to the effect of capillary action. Thereby, it is possible that the flow of the puncture repair liquid into the puncture hole is accelerated. That is, the puncture repair can be performed quickly and reliably. If the number of the bubbles (cells) is more than 60 / 25 mm, the puncture repair is slowed down due to excessive miniaturization and a decrease in the amount of the puncture repair liquid that flows through.

On the other hand, the porosity is set to be low by setting the ΣSa/S to be 30% or less, therefore, the amount of the puncture repair liquid that can be absorbed by the whole noise damper is limited. Thereby, it is possible that a situation in which the puncture repair liquid does not spread over the entire area and thus the puncture repair cannot be performed reliably is suppressed from occurring. Further, problems such as weight imbalance due to unevenness in the absorption amount can be suppressed. If the ΣSa/S is less than 10%, the porosity becomes too low, therefore, the noise damping effect becomes insufficient. Further, since the absorbed amount of the puncture repair liquid is decreased, the flow of the puncture repair liquid into the puncture hole also becomes slow.

### Brief Description of the Drawings

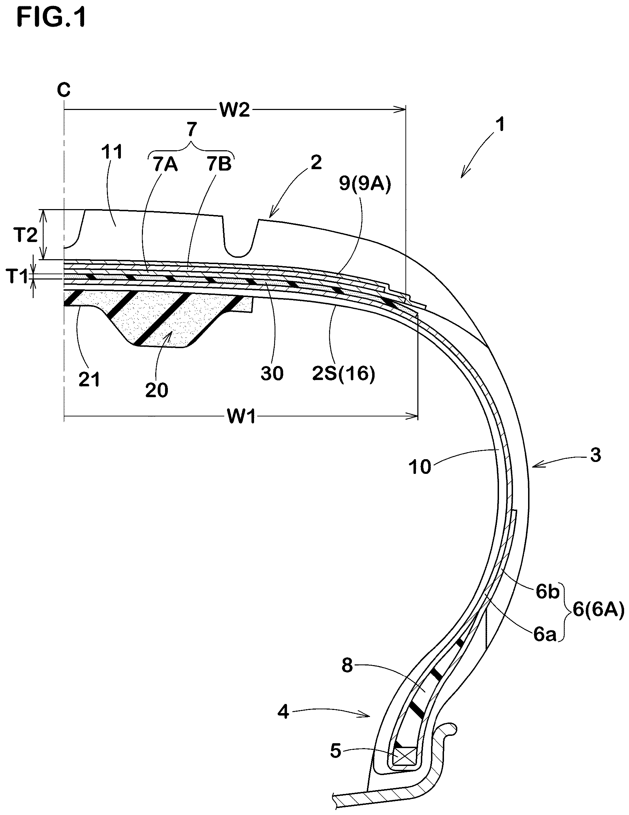

[Fig. 1] a cross-sectional view of a pneumatic tyre showing an embodiment of the present invention.

### Description of the Preferred Embodiment

An embodiment of the present invention will now be described in detail below.

As shown in Fig. 1, a pneumatic tyre (hereinafter, may be simply referred to as a "tyre") 1 has a carcass 6, a belt layer 7, a band layer 9, an inner liner 10, and a noise damper 20.

The carcass 6 extends between a pair of bead portions 4, 4. The carcass 6 is composed of at least one, one in the present invention, carcass ply 6A. The carcass ply 6A includes a main body portion (6a) extending between bead cores 5 of bead portions 4 via a tread portion 2 and sidewall portions 3 and turned up portions (6b) extending continuously from this main body portion (6a) and each being turned up around respective one of the bead cores 5 from inside to outside in a tyre axial direction. Between the main body portion (6a) and each of the turned up portions (6b) of the carcass ply 6A, a bead apex rubber 8 extending outwardly in a tyre radial direction from a respective one of the bead cores 5 is arranged.

The carcass ply 6A is provided with carcass cords (not shown) arranged at angles of 80 degrees or more and 90 degrees or less with respect to a tyre equator (C), for example.

The belt layer 7 is arranged radially outside the carcass 6 and inside the tread portion 2. The belt layer 7 of the present embodiment is composed of two belt plies 7A and 7B. The belt plies 7A and 7B are provided with belt cords (not shown) arranged at angles of 10 degrees or more and 35 degrees or less with respect to a tyre circumferential direction, for example. The belt plies 7A and 7B are overlapped in a direction such that the belt cords cross each other.

The band layer 9 is arranged radially outside the belt layer 7. The band layer 9 of the present embodiment is provided with a band ply 9A having band cords (not shown) spirally wound in a tyre circular direction.

The inner liner 10 is arranged inside the carcass and forms a tyre inner cavity surface 16. The inner liner 10 is made of butyl-based rubber having air impermeability, for example.

The noise damper 20 is arranged on an inner surface (2S) of the tread portion 2 in the tyre inner cavity surface 16. The noise damper 20 of the present embodiment has an elongated beltlike shape having a bottom surface fixed to the inner surface (2S) and extends in the tyre circumferential direction. In the noise damper 20 of the present invention, both end portions thereof in the tyre circumferential direction are in contact with each other. Thereby, it is formed as an annular body extending continuously in the tyre circumferential direction. Note that the both end portions of the noise damper 20 may be spaced apart in the tyre circumferential direction. In this case, it is preferred that a distance between the both end portions is 80 mm or less from the point of view of weight balance.

The noise damper 20 is formed of a porous material having interconnected bubbles (interconnected cells). As the porous material, a foam (so-called sponge) obtained by foaming rubber and synthetic resin can be suitably used. As the rubber foam, chloroprene rubber sponge (CR sponge), ethylene propylene rubber sponge (EPDM sponge), nitrile rubber sponge (NBR sponge), and the like can be suitably used, for example. Further, as the synthetic resin foam, ether-based polyurethane sponge, esterbased polyurethane sponge, polyethylene sponge, and the like can be suitably used. Among them, polyurethane-based or polyethylene-based sponges including ether-based polyurethane sponges are preferred from the point of view of noise damping property, lightweight property, controllability of foaming, durability, and the like.

The noise damper 20 has substantially the same cross-sectional shape at an arbitrary position in the tyre circumferential direction. As the cross-sectional shape, in order to prevent collapse and deformation during running, it is preferred that the cross-sectional shape is a flat and horizontally elongated shape in which a height in the tyre radial direction is smaller than a width in the tyre axial direction. In particular, it is preferred that a concave groove 21 extending continuously in the tyre circumferential direction is arranged on a side of the inner surface in the tyre radial direction of the noise damper 20.

In the noise damper 20 configured as such, the pores on the surface or inside thereof convert vibration energy of the vibrating air in the tyre inner cavity into thermal energy, therefore, the vibration energy is consumed. Thereby, cavity resonance energy is decreased, therefore, the road noise is decreased.

In the present embodiment, while the noise damper 20 has a single layer structure, it has the following characteristics in order to perform puncture repair quickly and reliably by using a puncture repair liquid.
(A) In the noise damper 20, the number (N) of bubbles (cells) is 30 or more and 60 or less / 25 mm.
(B) In an arbitrary cross section of the noise damper 20, a ratio of a total sum ΣSa of cross-sectional areas (Sa) of the bubbles to an area (S) of the cross section, that is, ΣSa/S is 10% or more and 30% or less.

The "number (N) of the bubbles (cells)" is measured in accordance with Japanese Industrial Standard JIS K6400-1, Annex 1 (reference). In the present embodiment, a surface of a test piece collected from the noise damper 20 is observed by using a scaled magnifying device having a magnification high enough for the observer to recognize the cells. Then, the number of the cells per 25 mm length on a straight line is measured visually. Note that the "number of the cells per 25 mm length on a straight line" means the number of the cells at least a part of which are located on the 25 mm long straight line. As the scaled magnifying device, a digital microscope manufactured by Leica is used, for example. The test piece has a thickness of 10 mm or more and a width and a length of 100 mm or more. The measurement locations are three locations, and the average value of the measurement results obtained at each of the measurement locations is adopted as the number (N). The larger the number (N) of the bubbles (cells), the smaller the bubbles (cells) are.

The "ΣSa/S" is obtained from a cross-sectional image at an arbitrary position of the noise damper 20 by using a scanning electron microscope (SEM). Then, by performing image processing to the cross-sectional image, the area (S) of the cross section of the noise damper 20, the total sum ΣSa of the cross-sectional areas (Sa) of the bubbles appearing in the cross section, and the ratio ΣSa/S are obtained. The measurement locations are three locations, and the average value of the measurement results obtained at each of the measurement locations is adopted as the ΣSa/S. The smaller the ΣSa/S, the lower the porosity is.

When puncture repair by using the puncture repair liquid is performed on the tyre 1 having the noise damper 20, the following problems may occur. For example, when the noise damper 20 is made of a porous material having closed cells, the puncture repair liquid does not enter the inside of the noise damper 20. Therefore, the puncture repair liquid does not reach the puncture hole and puncture repair is not performed. Further, even when the noise damper 20 is made of a porous material having interconnected bubbles, if the bubbles (cells) are large, the puncture repair liquid does not easily flow into the inside of the noise damper 20. Therefore, it takes time until the puncture hole is sealed.

On the other hand, in the present invention, the number of the bubbles (cells) is set to be 30 or more / 25 mm, and consequently the bubbles (cells) are miniaturized. Therefore, the puncture repair liquid is likely to penetrate into the inside of the noise damper 20 due to the effect of capillary action. This accelerates the flow of the puncture repair liquid into the puncture hole. That is, the puncture repair is performed quickly and reliably. However, if the number of the bubbles (cells) is more than 60 / 25 mm, the puncture repair tends to be slowed down due to excessive miniaturization and a decrease in the amount of the puncture repair liquid that flows through. From such a point of view, a lower limit value of the number (N) of the bubbles (cells) is preferably larger than 30 / 25 mm, and more preferably 35 or more / 25 mm. Further, it is preferred that an upper limit value thereof is 55 or less / 25 mm.

On the other hand, in the noise damper 20 having a single layer structure, when the bubbles (cells) are miniaturized and the permeability of the puncture repair liquid is increased, the injected puncture repair liquid is absorbed by the entire noise damper 20. That is, the absorption capacity of the noise damper 20 for absorbing the puncture repair liquid is remarkably increased. Therefore, when a normal tyre puncture repair kit intended for tyres without a noise damper is used, the injected amount of the puncture repair liquid is insufficient. Thereby, the puncture repair liquid does not spread throughout the entire circumferential direction, therefore, the puncture repair cannot be performed reliably. Further, there is a problem that unevenness occurs in the amount of absorption, which results in weight imbalance.

On the other hand, in the present invention, the amount of the puncture repair liquid that can be absorbed by the entire noise damper 20 is limited by setting the ZSa/S to 30% or less. Therefore, the puncture repair liquid can be spread over the entire circumferential direction, and the puncture repair can be reliably performed. Further, the occurrence of the weight imbalance due to the uneven absorption can be suppressed. When the ΣSa/S is less than 10%, the porosity becomes excessively small and the noise damping effect becomes insufficient. Further, since the absorbed amount of the puncture repair liquid is decreased, the flow of the puncture repair liquid into the puncture hole also becomes slow. From such a point of view, it is preferred that a lower limit value of the ΣSa/S is 15% or more, and that an upper limit thereof is 20% or less. Note that the number (N) of the bubbles (cells) and the ratio ΣSa/S can be determined by adjusting the type and the amount of foam stabilizer added to the porous material, for example.

In the noise damper 20, it is preferred that a water absorption rate is 8% or more and 15% or less. The "water absorption rate" is calculated by the following formula (1). In the formula (1), "weight change before and after immersion" means that an increase in the weight of a test piece having a length of 50 mm, a width of 50 mm, and a thickness of 20 mm after the test piece is compressed in the thickness direction at a compression rate of 50% and then immersed in water at a temperature of 20 degrees Celsius and held for 24 hours at a position of water depth of 10 cm. Water absorption rate (%) = Weight change before and after immersion (g)/ Volume at 50% compression (cm3) × 100

If the water absorption rate is more than 15%, the absorption capacity of the noise damper 20 for absorbing the puncture repair liquid is also increased. Thereby, the puncture repair liquid does not spread throughout the entire circumferential direction, therefore, the puncture repair cannot be performed reliably. Further, unevenness occurs in the amount of absorption, which tends to result in weight imbalance. On the other hand, if it is less than 8%, the flow of the puncture repair liquid into the puncture hole becomes slow, and the puncture repair tends to be delayed. From such a point of view, it is preferred that a lower limit of the water absorption rate is 10% or more and that an upper limit thereof is 13%. Note that the water absorption rate can be determined by adjusting the water repellent or hydrophilic agent added to the porous material, for example.

Further, in the noise damper 20, it is preferred that a hardness at a 25% compressive load in an atmosphere of -60 degrees Celsius is less than 110 kPa. This hardness at a 25% compressive load (25% CLD) is measured in accordance with Japanese Industrial Standard JIS K6400-2. In the present embodiment, a test piece collected from the noise damper 20 is left in an atmosphere of -60 degrees Celsius for 10 minutes, and then the 25% CLD is measured after the test piece is 25% compressed constantly for 20 seconds by using a testing machine in accordance with the D-method of Section 6 "Hardness Test" of Japanese Industrial Standard JIS K6400-2: 2012. In other words, the test piece is pressed to a thickness of 25%, the force is measured after holding the test piece for 20 seconds in this state (25% constant compression), and this is taken as the hardness. The size of the test piece is 240 mm (length) × 240 mm (width) × 45 mm (thickness). As the testing machine, a UFT urethane testing machine (UFT-5KN) manufactured by Japan Instrumentation System Co., Ltd. is used, for example.

Here, the noise damper 20 made of a porous material is hardened in a low temperature environment, and the effect of decreasing the road noise tends to decrease. However, the noise damper 20 in which the hardness at a 25% compressive load in an atmosphere of -60 degrees Celsius is set to be 110 kPa or less is difficult to harden under a low temperature environment. Therefore, air vibrations in the tyre inner cavity can be absorbed, thereby, the effect of decreasing the road noise is suppressed from decreasing. Note that the hardness mentioned above can be adjusted by the viscosity of raw materials of the noise damper 20, for example. In order to exert such effects more effectively, it is more preferred that the hardness at a 25% compressive load is 90 kPa or less. However, if the hardness at a 25% compressive load is too small, it is possible that the durability of the noise damper 20 is decreased. From such a point of view, a lower limit value of the hardness is preferably 50 kPa or more and more preferably 62 kPa or more.

Note that, in the tyre 1 of the present embodiment, a vibration suppressing rubber body 30 is arranged inside the tread portion and radially inside or outside the belt layer 7. The vibration suppressing rubber body 30 of the present embodiment is arranged between the carcass 6 and the belt layer 7. The vibration suppressing rubber body 30 is composed of rubber having a composition different from those of topping rubbers of the carcass ply 6A and the belt ply 7A.

In the present embodiment, a rubber hardness (H1) of the vibration suppressing rubber body 30 is lower than a rubber hardness (H2) of a tread rubber 11. The "rubber hardness" described above is defined by the rubber hardness measured in accordance with Japanese Industrial Standard JIS K6253 by a type-A durometer under the environment of 23 degrees Celsius.

The vibration suppressing rubber body 30 configured as such can suppress vibration of the tread portion 2, therefore, it is possible that running noise in the vicinity of 160 Hz is effectively decreased, for example. In addition, the tyre 1 of the present embodiment can also decrease noise in the vicinity of 250 Hz by the noise damper 20, therefore, it is possible that noise performance of the tyre 1 is effectively improved.

In order to effectively exert the effects mentioned above, it is preferred that a ratio (H1/H2) between the rubber hardness (H1) of the vibration suppressing rubber body 30 and the rubber hardness (H2) of the tread rubber 11 is 0.5 or more and less than 1.0. Note that if the ratio (H1/H2) is 1.0 or more, it is possible that the vibration of the tread portion 2 is not sufficiently suppressed. On the other hand, if the ratio (H1/H2) is less than 0.5, rigidity of the vibration suppressing rubber body 30 is decreased, therefore, it is possible that steering stability is not maintained. From such a point of view, it is preferred that an upper limit of the ratio (H1/H2) is 0.8 or less and that a lower limit thereof is 0.6 or more.

Further, the rubber hardness (H1) of the vibration suppressing rubber body 30 and the rubber hardness (H2) of the tread rubber 11 can be set as appropriate as long as the ratio (H1/H2) is satisfied. It is preferred that the rubber hardness (H1) of the present embodiment is set to be 30 degrees or more and 73 degrees or less. Further, it is preferred that the rubber hardness (H2) of the present embodiment is set to be 55 degrees or more and 75 degrees or less. Thereby, in the tyre 1, it is possible that the vibration of the tread portion 2 is effectively suppressed while the steering stability is maintained.

A width (W1) and a maximum thickness (T1) of the vibration suppressing rubber body 30 can be set as appropriate. The width (W1) of the vibration suppressing rubber body 30 of the present embodiment is set to be 60% or more and 130% or less of a width W2 in the tyre axial direction of the belt layer 7. Further, the maximum thickness (T1) is set to be 4% or more and 20% or less of a maximum thickness (T2) of the tread rubber 11. Thereby, the vibration suppressing rubber body 30 can suppress the vibration of the tread portion 2 while preventing the mass of the tyre 1 from increasing.

In the present embodiment, the vibration suppressing rubber body 30 arranged between the carcass 6 and the belt layer 7 is shown as an example, but the present invention is not limited to such a configuration. The vibration suppressing rubber body 30 may be arranged between the belt layer 7 and the band layer 9, for example. Further, it may be arranged radially outside the band layer 9.

While detailed description has been made of an especially preferred embodiment of the present invention, the present invention can be embodied in various forms without being limited to the illustrated embodiment.

### Working Examples (Examples)

Tyres having the basic structure shown in Fig. 1 and the noise damper according to the specification listed in Table 1 were manufactured. For comparison, a tyre (Reference 1) not having the noise damper was manufactured, and then their performance was evaluated. As the noise damper, an ether-based polyurethane sponge (interconnected bubbles) obtained by reacting a polyisocyanate component (X) and a polyol-containing component (Y) was used. The polyol-containing component (Y) includes a polyol component (a), a catalyst (b), a foam stabilizer (c), and water as a foaming agent, in the present example, the number (N) of the bubbles (cells) and the ratio ΣSa/S were adjusted by the type and the used amount of the foam stabilizer. Further, the water absorption rate was adjusted by the type and the used amount of the water repellent agent.

The specifications common to each of Examples and the Reference are as follows.
Tyre size: 245/50R18
Rim size: 18 × 7.5J
Tyre inner pressure: 230 kPa
Test vehicle: passenger car (domestically produced rearwheel drive hybrid vehicle)

### < Noise damper >

Material: Ether-based polyurethane sponge
Cross-sectional are: 10% of cross-sectional area of tyre inner cavity
Hardness at 25% compressive load in -60 degrees Celsius atmosphere: 90 kPa

### < vibration suppressing rubber body >

Rubber hardness (H1): 58 degrees
Maximum thickness (T1): 1 mm

### < Tread rubber >

rubber hardness (H2): 64 degrees (ratio (H1/H2) = 0.9)
Maximum thickness (T2): 10 mm (ratio (T1/T2) = 0.1)

### < Puncture repair performance >

The tyre mounted on the right front wheel and punctured by a nail (diameter 3.0 mm) in the center of the tread portion was filled with a commercially available puncture repair liquid (liquid amount of 400 cc) to perform puncture repair. The vehicle was driven at a speed of 40 km/h on a .7-turn test road having a turning radius of 50 m (about 1 km for 3 laps), and the tyre inner pressure (sealed state) was confirmed every 1 km. And the time until it reached the state in which the decrease of the tyre inner pressure stopped (the state in which the puncture hole was completely sealed) was measured. The reciprocal of the measurement time was evaluated by an index based on the Reference 1 being 100. The larger the numerical value, the shorter the time until the puncture hole was sealed, which means excellent puncture repair performance.

### < Road noise >

The tyres before puncturing were used to drive on a rough asphalt road surface for noise measurement at a speed of 50 km/h. At that time, the in-car noise was sampled by a microphone placed at a position in the vicinity of the driver's ear on a window-side of the driver's seat, and a sound pressure level of an air-column resonance sound at a peak occurring around 230 Hz was measured. The results were indicated by an increase / decrease value on a basis of the Reference 1. A negative indication means that the road noise was decreased.

**Table 1 (1/2)**

| | | Ref. 1 | Ex. 1 | Ex. 2 | Ex. 3 | Ex.4 | Ex. 5 | Ex. 6 | Ex. 7 | Ex. 8 | Ex. 9 |
|---|---|---|---|---|---|---|---|---|---|---|---|
| < Noise damper > | | Absent | Present (Fig. 1) | | | | | | | | |
| · Number (N) of cells | [/25mm] | -- | 50 | 60 | 35 | 30 | 35 | | | | 42 |
| · ΣSa/S | [%] | -- | 20 | | | | 30 | 15 | 10 | | |
| · Water absorption rate | [%] | -- | 15 | | | | 12 | | | 8 | |
| Puncture repair performance | | 100 | 90 | 80 | 80 | 75 | 85 | 80 | 75 | 72 | 78 |
| Road noise | [dB] | 0 | -10 | -10 | -10 | -10 | -12 | -10 | -8 | -8 | -8 |

**Table 1 (2/2)**

| | Ref.2 | Ref. 3 | Ref.4 | Ref. 5 |
|---|---|---|---|---|
| < Noise damper > | Present (Fig. 1) | | | |
| · Number (N) of cells [/25mm] | 65 | 25 | 50 | 50 |
| · ΣSa/S [%] | 20 | 20 | 5 | 40 |
| · Water absorption rate [%] | 15 | 15 | 15 | 15 |
| Puncture repair performance | 65 | 60 | 60 | *1 |
| Road noise [dB] | -10 | -10 | -5 | -12 |

As shown in the table, it was confirmed that the tyres in the Examples were capable of decreasing the cavity resonance energy and thus decreasing the road noise. Further, the tyres in the Examples were capable of performing puncture repair quickly and reliably by using the puncture repair liquid while the noise damper has a single layer structure.

_{*} 1 in the table indicates that the absorption capacity of the noise damper exceeds the injected amount of the puncture repair liquid. As a result, the puncture repair liquid did not spread throughout the entire tyre circumferential direction, therefore, the puncture repair could not be performed reliably. Further, the absorption amount was uneven, therefore, weight imbalance occurred.

### Description of Reference Signs

- 1: pneumatic tyre
- 2S: inner surface
- 2: tread portion
- 20: noise damper

## Claims

1. A pneumatic tyre (1) provided with a noise damper (20) made of a porous material having interconnected cells on an inner surface of a tread portion (2), wherein
in the noise damper (20), the number of cells, measured in accordance with JIS K 6400-1, is 30 or more and 60 or less / 25 mm length on a straight line, wherein the number of cells means the number of the cells at least a part of which is located on the 25 mm long straight line, **characterized in that**, in an arbitrary cross section of the noise damper (20), a ratio of a total sum ΣSa of cross-sectional areas of the cells to an area (S) of the cross section is 10% or more and 30% or less.

2. The pneumatic tyre (1) according to claim 1, wherein
the noise damper (20) has a water absorption rate of 8% or more and 15% or less, the water absorption rate being calculated using formula (1), wherein "weight change before and after immersion" means an increase in the weight of a test piece having a length of 50 mm, a width of 50 mm, and a thickness of 20 mm after the test piece is compressed in the thickness direction at a compression rate of 50% and then immersed in water at a temperature of 20°C and held for 24 hours at a water depth of 10 cm: Water absorption rate (%) = Weight change before and after immersion (g)/ Volume at 50% compression (cm3) × 100

3. The pneumatic tyre (1) according to claim 1 or 2, wherein
the porous material is ether-based polyurethane.

4. The pneumatic tyre (1) according to any one of claims 1 to 3, wherein the tread portion (2) is provided with a belt layer (7) and a vibration suppressing rubber body (30) arranged inside or outside the belt layer (7) in a tyre radial direction, and
a ratio (H1/H2) of a rubber hardness (H1) of the vibration suppressing rubber body (30) to a rubber hardness (H2) of a tread rubber (11) is 0.5 or more and less than 1.0, wherein the rubber hardness (H1, H2) is measured in accordance with Japanese Industrial Standard JIS K6253 by a type-A durometer at 23°C.

## Patentansprüche

1. Luftreifen (1), welcher an einer inneren Oberfläche eines Laufstreifenabschnitts (2) mit einem Geräuschdämpfer (20) versehen ist, der aus einem porösen Material hergestellt ist, das miteinander verbundene Zellen aufweist, wobei
in dem Geräuschdämpfer (20) die Anzahl an Zellen, gemessen gemäß JIS K 6400-1, 30 oder mehr und 60 oder weniger / 25 mm Länge auf einer geraden Linie beträgt, wobei die Anzahl an Zellen die Anzahl der Zellen bedeutet, von denen sich zumindest ein Teil auf der 25 mm langen geraden Linie befindet, **dadurch gekennzeichnet, dass**, in einem beliebigen Querschnitt des Geräuschdämpfers (20), ein Verhältnis einer Gesamtsumme ΣSa an Querschnittsflächen der Zellen zu einer Fläche (S) des Querschnitts 10% oder mehr und 30% oder weniger beträgt.

2. Luftreifen (1) nach Anspruch 1, wobei
der Geräuschdämpfer (20) eine Wasserabsorptionsrate von 8% oder mehr und 15% oder weniger aufweist, wobei die Wasserabsorptionsrate unter Verwendung von Formel (1) berechnet ist,
wobei "Gewichtsänderung vor und nach Eintauchen" einen Gewichtsanstieg eines Prüfkörpers, der eine Länge von 50 mm, eine Breite von 50 mm, und eine Dicke von 20 mm aufweist, bedeutet, nachdem der Prüfkörper in der Dickenrichtung mit einer Kompressionsrate von 50% komprimiert und dann in Wasser bei einer Temperatur von 20°C eingetaucht und für 24 Stunden bei einer Wassertiefe von 10 cm gehalten wurde: Wasserabsorptionsrate (%) = Gewichtsänderung vor und nach Eintauchen (g)/ Volumen bei 50% Kompression (cm3) × 100

3. Luftreifen (1) nach Anspruch 1 oder 2, wobei
das poröse Material Ether-basiertes Polyurethan ist.

4. Luftreifen (1) nach einem der Ansprüche 1 bis 3, wobei
der Laufstreifenabschnitt (2) mit einer Gürtelschicht (7) und einem in einer Reifenradialrichtung innerhalb oder außerhalb der Gürtelschicht (7) angeordneten schwingungsdämpfenden Kautschukkörper (30) versehen ist, und
ein Verhältnis (H1/H2) einer Kautschukhärte (H1) des schwingungsdämpfenden Kautschukkörpers (30) zu einer Kautschukhärte (H2) eines Laufstreifenkautschuks (11) 0,5 oder mehr und weniger als 1,0 beträgt, wobei die Kautschukhärte (H1, H2) gemäß der Japanischen Industrienorm JIS K6253 durch ein Typ-A-Durometer bei 23°C gemessen ist.

## Revendications

1. Bandage pneumatique (1) doté d'un amortisseur de bruit (20) fait à partir d'un matériau poreux ayant des cellules interconnectées sur une surface intérieure d'une portion formant bande de roulement (2), dans lequel
dans l'amortisseur de bruit (20), le nombre de cellules, mesuré conformément à la norme industrielle japonaise JIS K 6400-1, est de 30 ou plus et de 60 ou moins / 25 mm de longueur sur une ligne droite, le nombre de cellules signifiant le nombre de cellules dont au moins une partie est située sur la ligne droite de 25 mm de longueur, **caractérisé en ce que**, dans une section arbitrairement transversale de l'amortisseur de bruit (20), un rapport d'une somme totale ΣSa d'aires de section transversale des cellules sur une aire (S) de la section transversale est de 10 % ou plus et de 30 % ou moins.

2. Bandage pneumatique (1) selon la revendication 1, dans lequel
l'amortisseur de bruit (20) a un taux d'absorption d'eau de 8 % ou plus et de 15 % ou moins, le taux d'absorption d'eau étant calculé à l'aide de la formule (1), où « changement de poids avant et après immersion » signifie une augmentation dans le poids d'une pièce d'essai ayant une longueur de 50 mm, une largeur de 50 mm, et une épaisseur de 20 mm après compression de la pièce d'essai dans la direction d'épaisseur à un taux de compression de 50 % et puis immersion dans l'eau à une température de 20 °C et maintien pendant 24 heures à une profondeur d'eau de 10 cm : taux d'absorption d'eau (%) = changement de poids avant et après immersion (g) / volume à 50 % de compression (cm3) × 100

3. Bandage pneumatique (1) selon la revendication 1 ou 2, dans lequel
le matériau poreux est un polyuréthane à base d'éther.

4. Bandage pneumatique (1) selon l'une quelconque des revendications 1 à 3, dans lequel
la portion formant bande de roulement (2) est dotée d'une couche de ceinture (7) et d'un corps en caoutchouc suppresseur de vibrations (30) agencé à l'intérieur ou à l'extérieur de la couche de ceinture (7) dans une direction radiale du pneumatique, et
un rapport (H1/H2) d'une dureté de caoutchouc (H1) du corps en caoutchouc suppresseur de vibrations (30) sur une dureté en caoutchouc (H2) d'un caoutchouc de bande de roulement (11) est supérieur ou égal à 0,5 ou inférieur à 1,0, la dureté de caoutchouc (H1, H2) étant mesurée conformément à la norme industrielle japonaise JIS K6253 au moyen d'un duromètre de type A à 23 °C.
